# EUROPEAN PATENT SPECIFICATION

(11) **EP 4 469 684 B1**
(45) Date of publication and mention of the grant of the patent: **02.12.2026**
(21) Application number: 22702706.7
(22) Date of filing: 28.01.2022
(51) Int. Cl.: F04D 13/06, F04D 29/42, H02K 1/2793, H02K 3/28, H02K 21/24, F04D 29/58

(54) **AUTOMOTIVE ELECTRONIC FLOW PUMP**
ELEKTRONISCHE STRÖMUNGSPUMPE FÜR KRAFTFAHRZEUGE
POMPE D'ÉCOULEMENT ÉLECTRONIQUE D'AUTOMOBILE

(43) Date of publication of application: 04.12.2024
(73) Proprietor: Pierburg Pump Technology GmbH, 41460 Neuss (DE)
(72) Inventor: RATHKE, Ronald, 41460 Neuss (DE); HENKE, Toni, 41460 Neuss (DE); RIEDEL, Markus, 41460 Neuss (DE)
(74) Representative: Eisenführ Speiser
(86) International application number: PCT/EP2022/052086
(87) International publication number: WO 2023/143736

(56) References cited:
- DE-A1- 3 822 897
- US-A1- 2014 377 101
- US-A1- 2018 245 596
- US-A1- 2019 257 319

## Description

The invention refers to an automotive electronic flow pump, and preferably to an automotive coolant liquid pump for generating a coolant flow in a coolant circuit, preferably in a traction engine coolant circuit.

An electronic flow pump comprises a motor electronics which is energized by the automotive DC power supply network and which generates a rotating electromagnetic field via a motor stator with at least one stator coil. The electromagnetic part of an electronic flow pump can be realized as a radial-flux motor or as an axial-flux motor, whereas an axial-flux motor generally is more compact compared to a radial-flux motor of the same electric performance. DE 10 2012 200 807 B4, WO 2018 140 731 A1 and JP 2011-106 323 A disclose stationary AC flow pumps provided with an axial-flux motor, respectively.

US 2019 0257 319 A1 discloses an electric flow pump with an axial-flux motor with the motor stator provided at the frontside of the pump wheel.

US 2018 0245 5569 A1 discloses a similar electronic flow pump with the power electronics for driving the motor stator being provided directly adjacent to the motor stator at the frontside of the pump wheel.

US 2018 0245 596 discloses an electronic flow pump with two axial motor stators, one motor stator at the frontside and one motor stator at the backside of the pump wheel. The power electronics is provided at the backside of the backside-motor stator within a combined single motor stator-electronics housing.

It is an object of the invention, to provide a compact and reliable automotive electronic flow pump.

This object is realized, according to the invention, with an automotive electronic flow pump with the features as defined in main claim 1.

The automotive electronic flow pump according to the invention is provided with an axial-flux motor for driving the fluidic part of the pump. The automotive electronic flow pump is provided with a rotatable pump wheel with an axial fluid inlet at the wheel-upstream front side of the pump wheel and with a radial ring-like fluid outlet at the outer circumference of the pump wheel. The pump wheel is a so-called impeller. The pump wheel is arranged within a pumping chamber defined by a pump housing. The axial-flux motor directly drives the pump wheel and comprises at least one motor stator coil and a preferably permanently magnetized motor rotor which is co-rotatably provided at the upstream front side of the pump wheel. The pump wheel including the motor rotor is arranged in a wet section of the flow pump which is filled with the pumping fluid.

A static separation wall is provided at the backside of the pump wheel and fluidically separates the wet pumping chamber from an adjacent dry electronics chamber. A motor electronics is provided in the electronics chamber and is electrically connected to the stator coil/s to drive the stator coil/s. The motor electronics is energized by the automotive direct current network and electronically generates a rotating magnetic field which is followed by the permanently magnetized motor rotor. The motor is a so-called brushless synchronous DC motor.

In axial direction, the pump wheel and the motor rotor are arranged axially between the motor stator and the motor electronics. As a result, the static separation wall is part of the pumping chamber wall arrangement and is therefore perfectly cooled by the pump fluid which preferably is a coolant liquid. As a result, the motor electronics including the power semiconductors of the motor electronics at the distal side of the static separation wall is effectively cooled by the pump fluid. Since the motor is designed as an axial-flux motor, the electronic flow pump can be provided very compact. The total wet surface of the rotor including the pump wheel and the motor rotor, and the resulting total moment of fluid friction is relatively small compared to a flow pump with a radial-flux motor so that the hydraulic friction losses caused by the wet motor rotor are relatively small.

Preferably, the motor electronics is electrically connected to the at least one stator coil by at least two coil-connecting wires axially passing the pumping chamber radially outside of the pumping chamber. More preferably, all coil-connecting wires, preferably three coil-connecting wires, are combined and concentrated in one single coil-connecting wires path and are not distributed over the complete circumference of the pump. All coil-connecting wires are provided within a single circumferential sector of less than 60°. The coil-connecting wires path is provided with a substantially axial orientation which does not necessarily mean that the coil connecting wires are orientated exactly axially.

More preferably, the coil-connecting wires path is provided circumferentially in an upstream volute-half-sector, not in the downstream volute-half-sector. The upstream volute half-sector is the sector of about 170-180° fluidically starting from where the volute has the smallest total fluidic cross section and ending in the middle of the volute path.

Since the volute cross-section is relatively small in the first upstream volute-sector-half, the total flow pump diameter is not substantially affected by the coil-connecting wires path arranged in the sector with a relatively small volute cross section. More preferably, the coil-connecting wires path is provided close or adjacent to a tangential pump outlet duct.

According to another aspect of the invention, the separation wall is a metal sheet body and the motor electronics is, at least in part, in direct thermal contact with the separation wall. In particular, the power semiconductors of the motor electronics are in direct thermal contact with the distal surface of the separation wall so that the power semiconductors are reliably cooled by the pump fluid continuously flowing over the proximal surface of the metal separation wall.

Preferably, the separation wall body defines an axially protruding friction bearing support means, and thereby can define the inner bearing ring of a radial friction bearing.

Preferably, the separation wall is substantially lying in a transversal plane and is provided with at least one proximal protuberance projecting into the wet pumping chamber. An axial contact pin end is protruding from a printed circuit board of the motor electronics into the protuberance cavity defined by the proximal protuberance.

For providing a simple and high-power transferring welding connection it is difficult to avoid an axial proximal projection of a contact pin being welded or soldered to the printed circuit board. Since the axial proximal contact pin projection can protrude into the protuberance cavity, the motor electronics printed circuit board can be arranged very close or in direct contact to the separation wall sheet body so that a large area of the printed circuit board is effectively cooled by the pump fluid via the separation wall sheet body.

Preferably, a plastic electronics chamber lid body distally encloses the electronics chamber, whereas at least a cast-in section of a stiff U-shaped coil connecting wire is cast-in the plastic lid body. The plastic lid body has a lid function and additionally has a connecting wire holding function, and mechanically supports an axial part or section of the coil connecting wire to electrically isolate the coil connecting wire and to facilitate the assembly of the flow pump.

The U-shaped coil-connecting wire has two wire legs which are orientated substantially axially and in parallel to each other. The legs are connected to each other by a legs-connecting wire bridge of the U-shaped coil-connecting wire. The legs-connecting wire bridge preferably lies substantially in a transversal plane.

Preferably a pin end of an axial electronics connector leg of the coil connecting wire is electrically directly connected, preferably welded or soldered, to a printed circuit board of the motor electronics. More preferably, the other leg which is the axial coil-connector leg of the U-shaped coil-connecting wire laterally passes the fluid chamber including the rotatable pump wheel to define a part of the axial electric connection between the motor electronics and the at least one stator coil.

Preferably, the legs-connecting wire bridge of the connector wire defines the cast-in section of the coil-connecting wire which section is cast-in the plastic electronics chamber lid body.

The automotive electronic flow pump is provided with an electrical connector plug being provided with several electric pump connector pins. At least two pump connector pins of the connector plug are cast-in the plastic electronics chamber lid body. The proximal pin ends of the connector pins are directly electrically connected to a printed circuit board of the motor electronics. The proximal pin ends preferably project into a protuberance cavity of a separation wall protuberance.

The proximal pin end of the coil-connecting wire end of the pump connector pins are all parallel to each other and are axially orientated.

Preferably, a pump housing main body defines an axial pump inlet opening and a tangential pump outlet opening, and also defines an assembly chamber where a coil-connecting wire end and a wire end of a separate coil wire of the stator coil are electrically connected to each other by welding or soldering. The coil wire provides a substantially radial electric connection between the motor electronics connector wire end and the corresponding stator coil. The assembly chamber allows to electrically connect the motor electronics connector wire end and the stator coil connector wire end with each other. The electrical and mechanical connection of the wire ends can be of any suitable technique, but preferably is a welding or soldering connection.

Preferably, the pump housing main body defines an assembly chamber access opening which is closed by a separate access chamber opening lid. During the pump assembling process, the assembly chamber is accessible through the assembly chamber access opening so that the corresponding wire ends can be electrically and mechanically connected to each other, for example, by a welding process. After all wire end connections have been made, the assembly chamber access opening is closed by applying and fixing the access chamber opening lid to the access opening. The access chamber opening lid is preferably made of plastic.

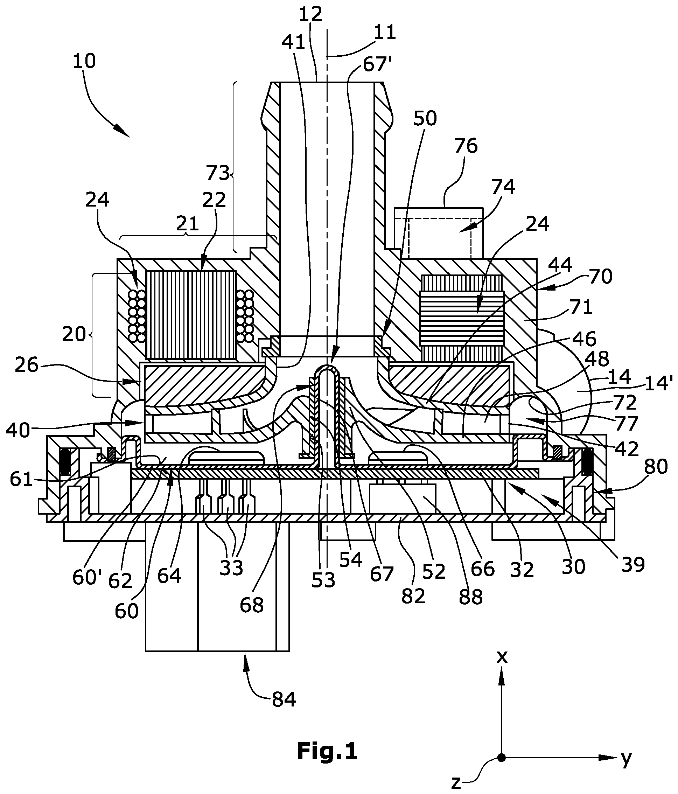

One embodiment of the invention is described with reference to the enclosed drawings, wherein
figure 1 shows a longitudinal cross section of an automotive electric flow pump according to the invention, the pump housing substantially defined by a pump housing main body and an electronics lid body,
figure 2 a longitudinal cross-section in another circumferential angle of a detail of the flow pump of figure 1,
figure 3 a perspective view of a section of the electronics lid body of figure 1, and
figure 4 a top view of the flow pump of figure 1.

The figures show an automotive electronic flow pump 10 which is, in the present embodiment, a liquid pump for a primary or a secondary cooling circuit of the automotive unit. The electronic flow pump 10 comprises an electronic axial-flux motor 20 directly driving a rotatable pump wheel 40.

The plastic pump wheel 40 is a so-called impeller and is provided with a ring-like pump wheel front wall 44 defining an axial circular fluid inlet 41 at the upstream front side, a disc-like pump wheel back wall 46 and several pump wheel blades 48 being arranged between the front wall 44 and the back wall 46. The rotatable pump wheel 40 defines a circumferential radial fluid outlet 42 with a substantially cylindrical outlet opening. The pump wheel 40 rotates around a rotational axis 11 defining the axial direction x.

The electromagnetic part of the electronic axial-flux motor 20 is substantially defined by a static motor stator 21 and a permanently magnetized and ring-like motor rotor 26 being co-rotatably fixed to the front side surface of the pump wheel front wall 44. The motor stator 21 is defined by a ring-like stacked stator body 22 and several stator coils 24 being electrically arranged in three phases in a triangle or a star arrangement.

The axial-flux motor 20 is a brushless synchronous DC motor and is provided with a motor electronics 30 comprising a printed circuit board 32, several power semiconductors assembled to the printed circuit board 32, and a commutation unit at the printed circuit board 32. The motor electronics 30 energizes the stator coils 24 to thereby generate a rotating electromagnetic field to which the motor rotor 26 follows.

The pump housing is defined by a plastic main housing part 70 and a separate plastic electronics chamber lid body 80. The main housing part 70 defined by the plastic main housing part body 71 substantially surrounds a wet pumping chamber 77 with a cavity for housing the pump wheel 40 and with a circumferential pumping channel volute 72 with a continuously increasing cross-sectional area from the volute start to the volute end. The volute end leads into a tangential pump outlet duct 14' defining a tangential pump outlet 14. The main housing part 70 also defines an axial pump inlet duct 73 defining an axial pump inlet 12.

The wet pumping chamber 77 is separated from the dry electronics chamber 39 housing the motor electronics 30 by a static separation wall 60 defined by a disc-like metal sheet separation wall body 60' substantially lying in a transversal plane yz and having a distal dry surface 62 and a proximal wet surface 61. The separation wall body 60' also integrally defines an axial, hollow and sleeve-like bearing shaft body 67 providing a static friction bearing support means 67' of a radial friction bearing for the rotor comprising of the pump wheel 40 and the motor rotor 26. The radial rotor bearing arrangement is also provided with a separate cylindrical low-friction bearing sleeve 54 between the cylindrical outside surface 68 of the bearing shaft body 67 and the cylindrical inside surface 53 of a cylindrical integral bearing part 52 of the pump wheel 40.

The pump wheel 40 is axially supported by an axial bearing ring 50 between the inlet opening ring surface around the pump wheel fluid inlet 41 and the corresponding static ring surface of the housing main body 71.

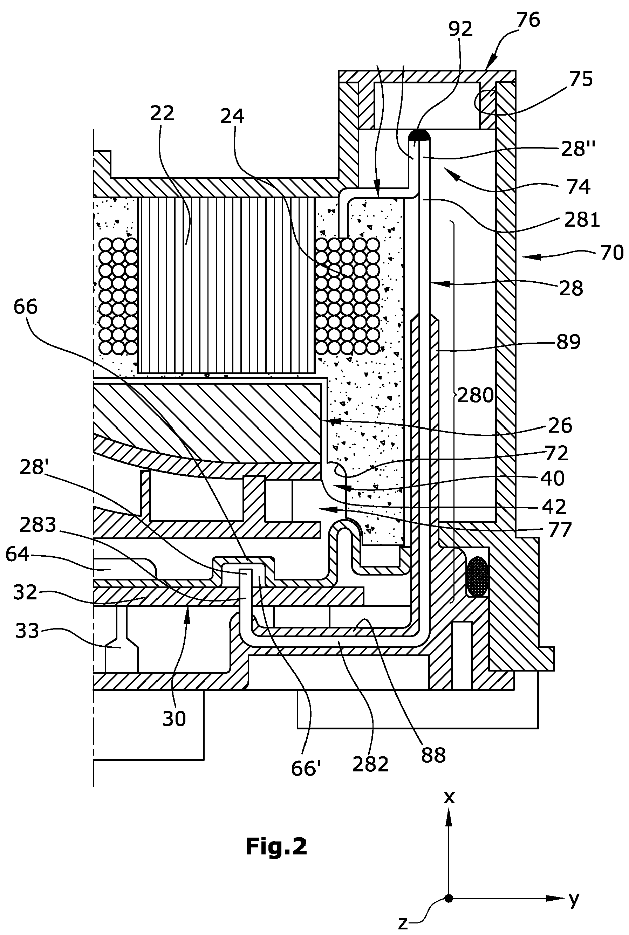

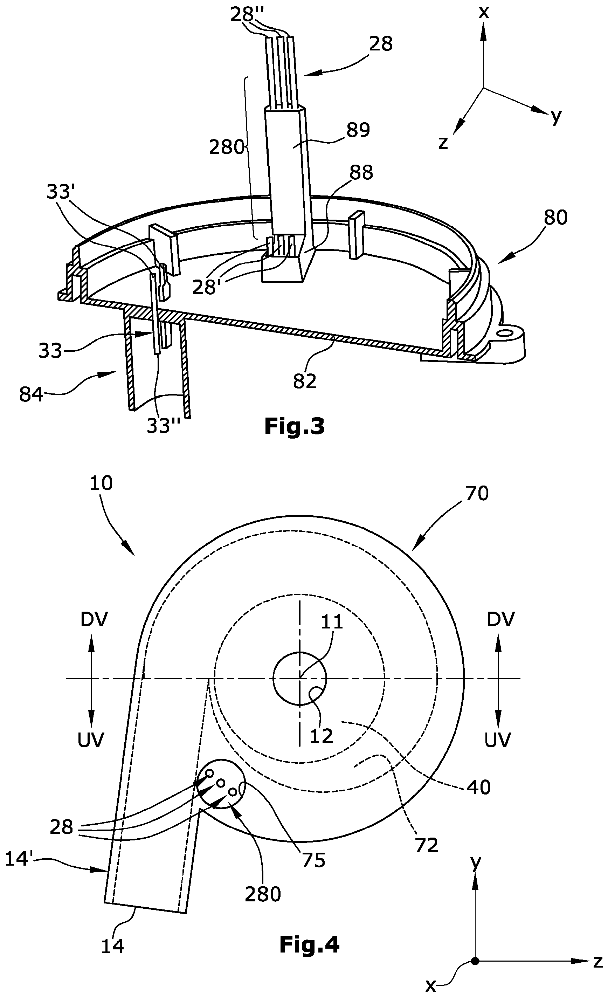

The printed circuit board 32 of the motor electronics 30 is electrically connected to the stator coils 24 by three coil-connecting wires 28 axially passing the pumping chamber 77 radially outside of the pumping chamber 77. The three coil connecting wires 28 are combined in one single and substantially axial connecting wires path 280 as shown in figures 2 and 3. The three coil connecting wires 28 each have a U-shaped form as shown in figure 2. Every coil-connecting wire 28 has a short axial electronics connector leg 283, a long axial coil connector leg 281 and a legs-connecting bridge 282 substantially lying in a transversal plane yz. As shown in figures 2 and 3, the legs-connecting bridge 282 and a substantial part of the axial coil connector leg 281 are integrally cast-in into the plastic electronics chamber lid body 80. The electronics chamber lid body 80 is provided with an integral massive bridge portion 88 and an integral massive axial leg portion 89 both axially-proximally protruding from the transversal end wall 82 of the electronics chamber lid body 80. The two lid body portions 88, 89 together have the form of the block letter L and thereby electrically isolate and mechanically support a substantial length of every coil-connecting wire 28.

An axial pin end 28' of the axial electronics connector leg 283 of every coil connecting wire 28 is electrically directly connected by soldering to the printed circuit board 32 of the motor electronics 30. The axial pin ends 28' proximally project from the proximal surface of the printed circuit board 32 and thereby project into a protuberance cavity 66' defined by a proximal protuberance 66 of the separation wall 60. Most of the proximal surface of the printed circuit board body 32 is in direct thermal contact with the separation wall 60. The thermal contact can be improved by a thin layer of a suitable material of high thermal conductivity.

The non-isolated end section of every coil connector leg 281 of the three coil connecting wires 28 projects into an assembly chamber 74 defined by the housing main body 70. The coil-connecting wire ends 28" of the coil connector legs 281 are respectively welded together and thereby electrically connected with corresponding wire ends 90" of three coil wires 90 by a suitable welding seam 92. The three coil wires 90 electrically connect the three phases of the stator coils 24 with the three corresponding coil connecting wires 28.

The assembly chamber 74 is axially accessible via an assembly chamber access opening 75 for providing the welding action for electrically and mechanically connecting the wire ends 28",90" after the mechanical assembly of all pump components. The assembly chamber access opening 75 is finally closed by a separate access opening lid 76 to thereby provide a fluid-tight isolation of the assembly chamber 74.

As shown in figure 4, the axial connecting wires path 280 for the three coil connector legs 281 of the coil-connecting wires 28 is provided adjacent to the pump outlet duct 14' so that the connecting wires path 280 is located in an upstream-volute-half sector UV where the cross section of the volute channel 72 is smaller than in the downstream volute-half-sector DV. The total diameter of the flow pump 10 is not substantially affected by the connecting wires path 280.

The flow pump 10 is provided with an electrical pump connector plug 84 with electrical contacts defined by three pump connector pins ends 33" of three axial pump connector pins 33. The proximal pin ends 33' of the pump connector pins 33 are directly electrically connected to the printed circuit board 32 by soldering, and proximally project from the proximal side of the printed circuit board 32 into a protuberance cavity of a proximal protuberance 66 defined by the separation wall body 60'. The electrical pump connector plug 84 is the electrical interface of the pump 10, so that the pump 10 can be electrically connected to a suitable control device by a suitable complementary electric plug means plugged into the connector plug 84.

## Claims

1. An automotive electronic flow pump (10) comprising an axial-flux motor (20), with
a rotatable pump wheel (40) with an axial fluid inlet (41) at the wheel upstream front side and a radial fluid outlet (42),
the axial-flux motor (20) directly driving the pump wheel (40) being arranged within a pumping chamber (77) defined by a pump housing,
the motor (20) comprising a motor stator (21) with at least one stator coil (24) and comprising a motor rotor (26) co-rotatably provided only at the front side of the pump wheel (40),
the pump being **characterized by** a static separation wall (60) arranged at the backside of the pump wheel (40) and fluidically separating the wet pumping chamber (77) from an adjacent dry electronics chamber (39), and
a motor electronics (30) provided in the electronics chamber (39) and directly electrically connected to the at least one stator coil (24), so that the pump wheel (49) and the motor rotor (26) are arranged axially between the motor stator (21) and the motor electronics.

2. The automotive electronic flow pump (10) of claim 1, wherein the motor electronics (30) is electrically connected to the at least one stator coil (24) by at least two coil-connecting wires (28) axially passing the pumping chamber (77) radially outside of the pumping chamber (77).

3. The automotive electronic flow pump (10) of claim 2, wherein all coil-connecting wires (28) are combined in one single substantially axial connecting wires path (280).

4. The automotive electronic flow pump (10) of claim 3, wherein the connecting wires path (280) is provided circumferentially in an upstream volute-half-sector (UV) where the cross section of a volute channel (72) defined by the pump housing and surrounding the radial fluid outlet (42) of the pump wheel (40) is smaller than in the downstream volute-half-sector (DV).

5. The automotive electronic flow pump (10) of one of the preceding claims, wherein the separation wall (60) is a metal sheet body (60'), and the motor electronics (30) is in direct thermal contact with the separation wall (60).

6. The automotive electronic flow pump (10) of claim 5, wherein the separation wall body (60') defines an axially protruding friction bearing support means (67').

7. The automotive electronic flow pump (10) of one of the preceding claims, wherein the separation wall (60) is substantially lying in a transversal plane (YZ) and is provided with at least one proximal protuberance (64,66), and a contact pin end (33',28') is protruding from a printed circuit board (32) of the motor electronics (30) into a protuberance cavity (66') defined by the protuberance (64,66).

8. The automotive electronic flow pump (10) of one of the preceding claims, wherein an electronics chamber lid body (80) made of plastic and enclosing the electronics chamber (39) is provided, wherein at least a cast-in section (282) of a stiff U-shaped coil connecting wire (28) is cast-in the plastic lid body (80).

9. The automotive electronic flow pump (10) of one of claims 2 to 8, wherein a pin end (28') of an axial electronics connector leg (283) of the coil connecting wire (28) is electrically directly connected to a printed circuit board (32) of the motor electronics (30).

10. The automotive electronic flow pump (10) of one of claims 2 to 9, wherein an axial coil connector leg (281) of the coil connecting wire (28) laterally passes the pumping chamber (77).

11. The automotive electronic flow pump (10) of one of claims 8 to 10, wherein at least a legs-connecting bridge (282) of the connector wire (28) defines the cast-in section of the coil connecting wire (28).

12. The automotive electronic flow pump (10) of one of claims 8 to 11, wherein at least two pump connector pins (33) are cast-in the plastic electronics chamber lid body (80), wherein the proximal pin ends (33') of the pump connector pins (33) are directly electrically connected to a printed circuit board (32) of the motor electronics (30).

13. The automotive electronic flow pump (10) of one of claims 2 to 12, wherein the proximal pin ends (28',33') of the coil connecting wires (28) and of the pump connector pins (33) are parallel to each other and are axially orientated.

14. The automotive electronic flow pump (10) of one of the preceding claims, wherein a pump housing main body (70) defining an axial pump inlet (12) and a tangential pump outlet (14) defines an assembly chamber (74) where a coil-connecting wire end (28") and a wire end (90") of a separate coil wire (90) directly connected to a stator coil (24) are electrically directly connected to each other.

15. The automotive electronic flow pump (10) of the preceding claim, wherein the housing main body (70) defines an assembly chamber access opening (75) which is closed by a separate access opening lid (76).

## Patentansprüche

1. Automobile elektronische Strömungspumpe (10) umfassend einen Axialflussmotor (20), mit
einem drehbaren Pumpenrad (40) mit einem axialen Fluideinlass (41) an der stromaufwärtigen Vorderseite des Rades und einem radialen Fluidauslass (42),
wobei der Axialflussmotor (20) das Pumpenrad (40) direkt antreibt, welches innerhalb einer durch ein Pumpengehäuse definierten Pumpenkammer (77) angeordnet ist,
wobei der Motor (20) einen Motorstator (21) mit wenigstens einer Statorspule (24) und einen Motorrotor (26) umfasst, der mitdrehend nur an der Vorderseite des Pumpenrads (40) vorgesehen ist,
wobei die Pumpe **dadurch gekennzeichnet ist, dass**
eine statische Trennwand (60) an der Rückseite des Pumpenrads (40) angeordnet ist und die nasse Pumpenkammer (77) fluidisch von einer benachbarten trockenen Elektronikkammer (39) trennt, und eine Motorelektronik (30) in der Elektronikkammer (39) vorgesehen und direkt elektrisch mit der wenigstens einen Statorspule (24) verbunden ist, sodass das Pumpenrad (40) und der Motorrotor (26) axial zwischen dem Motorstator (21) und der Motorelektronik angeordnet sind.

2. Automobile elektronische Strömungspumpe (10) nach Anspruch 1, wobei die Motorelektronik (30) mit der wenigstens einen Statorspule (24) durch wenigstens zwei Spulenverbindungsdrähte (28) elektrisch verbunden ist, die die Pumpenkammer (77) radial außerhalb der Pumpenkammer (77) axial durchsetzen.

3. Automobile elektronische Strömungspumpe (10) nach Anspruch 2, wobei alle Spulenverbindungsdrähte (28) in einem einzigen, im Wesentlichen axialen Verbindungsdrahtpfad (280) zusammengefasst sind.

4. Automobile elektronische Strömungspumpe (10) nach Anspruch 3, wobei der Verbindungsdrahtpfad (280) umfänglich in einem stromaufwärtigen Spiralgehäuse-Halbsektor (UV) vorgesehen ist, in dem der Querschnitt eines durch das Pumpengehäuse definierten und den radialen Fluidauslass (42) des Pumpenrads (40) umgebenden Spiralkanals (72) kleiner ist als in dem stromabwärtigen Spiralgehäuse-Halbsektor (DV).

5. Automobile elektronische Strömungspumpe (10) nach einem der vorhergehenden Ansprüche, wobei die Trennwand (60) ein Blechkörper (60') ist und die Motorelektronik (30) in direktem thermischem Kontakt mit der Trennwand (60) steht.

6. Automobile elektronische Strömungspumpe (10) nach Anspruch 5, wobei der Trennwandkörper (60') ein axial vorstehendes Gleitlagerstützmittel (67') definiert.

7. Automobile elektronische Strömungspumpe (10) nach einem der vorhergehenden Ansprüche, wobei die Trennwand (60) im Wesentlichen in einer Querebene (YZ) liegt und mit wenigstens einer proximalen Ausstülpung (64, 66) versehen ist, und ein Kontaktstiftende (33', 28') von einer Leiterplatte (32) der Motorelektronik (30) in einen von der Ausstülpung (64, 66) definierten Ausstülpungshohlraum (66') hineinragt.

8. Automobile elektronische Strömungspumpe (10) nach einem der vorhergehenden Ansprüche, wobei ein aus Kunststoff bestehender und die Elektronikkammer (39) umschließender Elektronikkammer-Deckelkörper (80) vorgesehen ist, wobei wenigstens ein eingegossener Abschnitt (282) eines steifen U-förmigen Spulenverbindungsdrahts (28) in den Kunststoff-Deckelkörper (80) eingegossen ist.

9. Automobile elektronische Strömungspumpe (10) nach einem der Ansprüche 2 bis 8, wobei ein Stiftende (28') eines axialen Elektronikanschlussschenkels (283) des Spulenverbindungsdrahts (28) elektrisch direkt mit einer Leiterplatte (32) der Motorelektronik (30) verbunden ist.

10. Automobile elektronische Strömungspumpe (10) nach einem der Ansprüche 2 bis 9, wobei ein axialer Spulenanschlussschenkel (281) des Spulenverbindungsdrahts (28) die Pumpenkammer (77) seitlich durchsetzt.

11. Automobile elektronische Strömungspumpe (10) nach einem der Ansprüche 8 bis 10, wobei wenigstens eine Schenkelverbindungsbrücke (282) des Verbindungsdrahts (28) den eingegossenen Abschnitt des Spulenverbindungsdrahts (28) definiert.

12. Automobile elektronische Strömungspumpe (10) nach einem der Ansprüche 8 bis 11, wobei wenigstens zwei Pumpenanschlussstifte (33) in den Kunststoff-Elektronikkammer-Deckelkörper (80) eingegossen sind, wobei die proximalen Stiftenden (33') der Pumpenanschlussstifte (33) direkt elektrisch mit einer Leiterplatte (32) der Motorelektronik (30) verbunden sind.

13. Automobile elektronische Strömungspumpe (10) nach einem der Ansprüche 2 bis 12, wobei die proximalen Stiftenden (28', 33') der Spulenverbindungsdrähte (28) und der Pumpenanschlussstifte (33) parallel zueinander und axial orientiert sind.

14. Automobile elektronische Strömungspumpe (10) nach einem der vorhergehenden Ansprüche, wobei ein einen axialen Pumpeneinlass (12) und einen tangentialen Pumpenauslass (14) definierender Pumpengehäusehauptkörper (70) eine Montagekammer (74) definiert, in der ein Spulenverbindungsdrahtende (28") und ein Drahtende (90") eines separaten, direkt mit einer Statorspule (24) verbundenen Spulendrahts (90) elektrisch direkt miteinander verbunden sind.

15. Automobile elektronische Strömungspumpe (10) nach dem vorhergehenden Anspruch, wobei der Gehäusehauptkörper (70) eine Montagekammer-Zugangsöffnung (75) definiert, die durch einen separaten Zugangsöffnungsdeckel (76) verschlossen ist.

## Revendications

1. Pompe d'écoulement électronique automobile (10) comprenant un moteur à flux axial (20), avec
une roue de pompe rotative (40) comportant une entrée de fluide axiale (41) au niveau du côté avant amont de la roue et une sortie de fluide radiale (42),
le moteur à flux axial (20) entraînant directement la roue de pompe (40) qui est agencée à l'intérieur d'une chambre de pompage (77) définie par un carter de pompe,
le moteur (20) comprenant un stator de moteur (21) avec au moins une bobine de stator (24) et comprenant un rotor de moteur (26) prévu de manière co-rotative uniquement du côté avant de la roue de pompe (40),
la pompe étant **caractérisée par**
une paroi de séparation statique (60) agencée au niveau du côté arrière de la roue de pompe (40) et séparant fluidiquement la chambre de pompage humide (77) d'une chambre d'électronique sèche (39) adjacente, et une électronique de moteur (30) prévue dans la chambre d'électronique (39) et directement connectée électriquement à l'au moins une bobine de stator (24), de sorte que la roue de pompe (40) et le rotor de moteur (26) sont agencés axialement entre le stator de moteur (21) et l'électronique de moteur.

2. Pompe d'écoulement électronique automobile (10) selon la revendication 1, dans laquelle l'électronique de moteur (30) est connectée électriquement à l'au moins une bobine de stator (24) par au moins deux fils de connexion de bobine (28) traversant axialement la chambre de pompage (77) radialement à l'extérieur de la chambre de pompage (77).

3. Pompe d'écoulement électronique automobile (10) selon la revendication 2, dans laquelle tous les fils de connexion de bobine (28) sont regroupés en un seul trajet des fils de connexion (280) sensiblement axial.

4. Pompe d'écoulement électronique automobile (10) selon la revendication 3, dans laquelle le trajet des fils de connexion (280) est prévu circonférentiellement dans un demi-secteur de volute amont (UV) où la section transversale d'un canal de volute (72) défini par le carter de pompe et entourant la sortie de fluide radiale (42) de la roue de pompe (40) est plus petite que dans le demi-secteur de volute aval (DV).

5. Pompe d'écoulement électronique automobile (10) selon l'une des revendications précédentes, dans laquelle la paroi de séparation (60) est un corps en tôle métallique (60'), et l'électronique de moteur (30) est en contact thermique direct avec la paroi de séparation (60).

6. Pompe d'écoulement électronique automobile (10) selon la revendication 5, dans laquelle le corps de paroi de séparation (60') définit un moyen de support de palier à friction (67') faisant saillie axialement.

7. Pompe d'écoulement électronique automobile (10) selon l'une des revendications précédentes, dans laquelle la paroi de séparation (60) est disposée sensiblement dans un plan transversal (YZ) et est munie d'au moins une protubérance proximale (64, 66), et une extrémité de broche de contact (33', 28') fait saillie depuis une carte de circuit imprimé (32) de l'électronique de moteur (30) dans une cavité de protubérance (66') définie par la protubérance (64, 66).

8. Pompe d'écoulement électronique automobile (10) selon l'une des revendications précédentes, dans laquelle un corps de couvercle de chambre d'électronique (80) en matière plastique et enfermant la chambre d'électronique (39) est prévu, dans laquelle au moins une section moulée (282) d'un fil de connexion de bobine (28) rigide en forme de U est moulée dans le corps de couvercle en matière plastique (80).

9. Pompe d'écoulement électronique automobile (10) selon l'une des revendications 2 à 8, dans laquelle une extrémité de broche (28') d'une branche de connexion électronique axiale (283) du fil de connexion de bobine (28) est connectée électriquement directement à une carte de circuit imprimé (32) de l'électronique de moteur (30).

10. Pompe d'écoulement électronique automobile (10) selon l'une des revendications 2 à 9, dans laquelle une branche de connexion de bobine axiale (281) du fil de connexion de bobine (28) traverse latéralement la chambre de pompage (77).

11. Pompe d'écoulement électronique automobile (10) selon l'une des revendications 8 à 10, dans laquelle au moins un pont de connexion des branches (282) du fil de connexion (28) définit la section moulée du fil de connexion de bobine (28).

12. Pompe d'écoulement électronique automobile (10) selon l'une des revendications 8 à 11, dans laquelle au moins deux broches de connecteur de pompe (33) sont moulées dans le corps de couvercle de chambre d'électronique en matière plastique (80), dans laquelle les extrémités de broches proximales (33') des broches de connecteur de pompe (33) sont connectées électriquement directement à une carte de circuit imprimé (32) de l'électronique de moteur (30).

13. Pompe d'écoulement électronique automobile (10) selon l'une des revendications 2 à 12, dans laquelle les extrémités de broches proximales (28', 33') des fils de connexion de bobine (28) et des broches de connecteur de pompe (33) sont parallèles entre elles et orientées axialement.

14. Pompe d'écoulement électronique automobile (10) selon l'une des revendications précédentes, dans laquelle un corps principal du carter de pompe (70) définissant une entrée de pompe axiale (12) et une sortie de pompe tangentielle (14) définit une chambre de montage (74) dans laquelle une extrémité de fil de connexion de bobine (28") et une extrémité de fil (90") d'un fil de bobine (90) séparé directement connecté à une bobine de stator (24) sont connectées électriquement directement l'une à l'autre.

15. Pompe d'écoulement électronique automobile (10) selon la revendication précédente, dans laquelle le corps principal du carter (70) définit une ouverture d'accès à la chambre de montage (75) qui est fermée par un couvercle d'ouverture d'accès (76) séparé.
